# EUROPÄISCHE PATENTANMELDUNG

(11) **EP 3 133 667 A1**
(43) Veröffentlichungstag der Anmeldung: **22.02.2017**
(21) Anmeldenummer: 15181414.2
(22) Anmeldetag: 18.08.2015
(51) Int. Cl.: H01M 2/02, H01M 2/04, H01M 2/06, H01M 2/26, H01M 10/04, H01M 10/0587, B60L 11/18

(54) **VERFAHREN ZUM HERSTELLEN EINER BATTERIEZELLE UND BATTERIEZELLE**

(71) Anmelder: Lithium Energy and Power GmbH & Co. KG, 70469 Stuttgart (DE)
(72) Erfinder: Klemen, Thomas, 74360 Ilsfeld / Auenstein (DE); Berg, Anselm, 71640 Ludwigsburg (DE)
(74) Vertreter: Bee, Joachim

(57) **Zusammenfassung**

Die Erfindung betrifft ein Verfahren zum Herstellen einer Batteriezelle (8), insbesondere einer Lithium-Ionen-Batteriezelle, umfassend ein Gehäuse (10) und einen in dem Gehäuse (10) angeordneten Batteriewickel (24), wobei der Batteriewickel (24) eine erste Elektrodenseite (26) und eine zweite Elektrodenseite (28) aufweist. Das Verfahren umfasst das stoffschlüssige Fügen der ersten Elektrodenseite (26) des Batteriewickels (24) mit einem metallischen Bodenteil (16) des Gehäuses (10) vor oder nach dem Einführen des Batteriewickels (24) in ein metallisches Wandteil (14) des Gehäuses (10) und das stoffschlüssige Fügen der zweiten Elektrodenseite (28) des Batteriewickels (24) mit einer Stromdurchführung (32) nach einem Einführen des Batteriewickels (24) in das metallische Wandteil (14), wobei nach einem stoffschlüssigen Fügen des metallischen Bodenteils (16) mit dem metallischen Wandteil (14) und dem stoffschlüssigen Fügen der zweiten Elektrodenseite (28) mit der Stromdurchführung (32) ein metallisches Deckelteil (12) mit dem metallischen Wandteil (14) stoffschlüssig gefügt wird, und wobei das stoffschlüssigen Fügen des metallischen Bodenteils (16) mit dem metallischen Wandteil erst nach dem stoffschlüssigen Fügen der ersten Elektrodenseite (26) des Batteriewickels (24) mit dem metallischen Bodenteil (16) erfolgt. Weitere Aspekte der Erfindung betreffen eine gemäß dem Verfahren hergestellte Batteriezelle sowie deren Verwendung.

## Beschreibung

### Stand der Technik

Die Erfindung bezieht sich auf ein Verfahren zum Herstellen einer Batteriezelle, insbesondere einer Lithium-Ionen-Batteriezelle mit einem Gehäuse und einem darin angeordneten elektrischen Speicherelement.

Batteriezellen, teilweise auch als Akkumulatorzellen bezeichnet, dienen zur Speicherung von elektrischer Energie. Bereits heute werden Batteriezellen zur Energieversorgung einer Vielzahl mobiler Geräte eingesetzt. Zukünftig sollen Batteriezellen unter anderem zur Energieversorgung von Elektrofahrzeugen oder Hybridfahrzeugen, zu Land wie auch zu Wasser, oder zur stationären Zwischenspeicherung von aus alternativen Energiequellen stammender elektrischer Energie eingesetzt werden.

Hierzu wird meist eine Vielzahl von Batteriezellen zu Batteriepaketen bzw. Batteriemodulen zusammengesetzt. Um hierbei ein zur Verfügung stehendes Paketvolumen möglichst effizient auszunutzen, werden für solche Zwecke aus Gründen des Volumennutzwertes vornehmlich Batteriezellen mit einer prismatischen, beispielsweise einer quaderartigen Form eingesetzt.

Es existieren bereits viele verschiedene Typen von Batteriezellen. Allerdings weisen herkömmliche Batteriezellen meist einen komplexen Aufbau auf, bei dem zum Zusammenbau der gesamten Batteriezelle eine Vielzahl unterschiedlicher Einzelteile eingesetzt wird. Insbesondere ist die Fertigung beim Zusammenbau einer Vielzahl von Einzelteilen sowohl kosten- als auch zeitintensiv.

Wegen ihrer hohen Energiedichte, thermischen Stabilität und fehlendem Memory-Effekt wird für Anwendungen, wie beispielsweise in Kraftfahrzeugen, meist die Lithium-Ionen-Technologie eingesetzt, welche aufgrund ihrer hohen wirtschaftlichen Bedeutung für die zukünftige Elektromobilität derzeit intensiv weiterentwickelt wird.

Im Inneren des Gehäuses solcher Lithium-Ionen-Zellen befindet sich ein flach gepresster Wickel (eine sogenannte "Jelly-Roll" bzw. ein "Coffee-Bag"), der aus einer Aluminium-Folie, aus einer Kupfer-Folie (diese sind mit reaktiven Kathoden- und Anoden-Stoffen beschichtet) sowie aus zwei als Diaphragmen dienenden Kunststofffolien gewickelt wird. Das Gehäuse wird nach Einbringen des Wickels und vor dessen druckdichten Verschließen mit einem flüssigen Elektrolyten befüllt.

Aus DE 10 2011 076 919 A1 geht hervor, dass das Gehäuse der Batteriezelle mindestens zwei das Elektrodenensemble von der Umgebung im Wesentlichen separierende Gehäuseelemente aufweist. Es ist vorgesehen, dass ein erstes Gehäuseelement elektrisch mit dem positiven Pol des Elektrodenensembles verbunden ist und ein zweites Gehäuseelement elektrisch mit dem negativen Pol des Elektrodenensembles verbunden ist, sodass die Batteriezelle am ersten Gehäuseelement und am zweiten Gehäuseelement elektrisch kontaktierbar ist.

DE 10 2011 082 288 A1 offenbart eine Energiespeichervorrichtung mit einem Gehäuse, in dem zumindest zwei Kammern zur Aufnahme jeweils einer Energiespeichereinrichtung ausgebildet sind, und mit zumindest zwei Energiespeichereinrichtungen, welche in Reihe geschaltet und jeweils in einer der Kammern angeordnet sind. Aus den Ausführungsbeispielen geht hervor, dass die Energiespeichereinrichtungen direkt mittels des Behälters des Gehäuses elektrisch verbunden und in Reihe geschaltet sein können, somit kann der Behälter des Gehäuses als weiterer Pol zur Ermittlung der Einzelspannungen der Energiespeichereinrichtungen fungieren.

Das wesentliche Element, der Batteriewickel, wird üblicherweise, wie aus DE 10 2013 201 572 A1 hervorgeht, in das Gehäuse eingeführt. Dies erfordert eine seitliche Kontaktierung durch Stromableiter sowie weitere Bauteile. Dies ist hinsichtlich der Volumenausnutzung mit Aktivmaterial nicht optimal.

### Offenbarung der Erfindung

Es wird ein Verfahren zum Herstellen einer Batteriezelle umfassend ein Gehäuse und einen in dem Gehäuse angeordneten Batteriewickel vorgeschlagen, wobei der Batteriewickel eine erste Elektrodenseite und eine zweite Elektrodenseite aufweist. Das Verfahren umfasst das stoffschlüssige Fügen der ersten Elektrodenseite des Batteriewickels mit einem metallischen Bodenteil des Gehäuses vor oder nach dem Einführen des Batteriewickels in ein metallisches Wandteil, und das stoffschlüssige Fügen der zweiten Elektrodenseite des Batteriewickels mit einer Stromdurchführung nach einem Einführen des Batteriewickels in das metallische Wandteil, wobei nach einem stoffschlüssigen Fügen des metallischen Bodenteils mit dem metallischen Wandteil und dem stoffschlüssigen Fügen der zweiten Elektrodenseite mit der Stromdurchführung ein metallisches Deckelteil mit dem metallischen Wandteil stoffschlüssig gefügt wird, und wobei das stoffschlüssige Fügen des metallischen Bodenteils mit dem metallischen Wandteil erst nach dem stoffschlüssigen Fügen der ersten Elektrodenseite des Batteriewickels mit dem metallischen Bodenteil erfolgt. Als metallisches Material für das Gehäuse bzw. Teile des Gehäuses ist Aluminium besonders geeignet.

Die zweite Elektrodenseite weist bevorzugt eine Kontaktfahne auf und wird mit der Stromdurchführung über diese Kontaktfahne stoffschlüssig gefügt, wobei die Stromdurchführung das metallische Deckelteil oder das metallische Wandteil durchragt und mit einem ersten Terminal verbunden wird.

Das metallische Deckelteil weist bevorzugt ein zweites Terminal auf, welches im Verlauf des erfindungsgemäßen Verfahrens auf das metallische Deckelteil aufgebracht oder in dieses integriert wird.

Alternativ kann das zweite Terminal im Verlauf des erfindungsgemäßen Verfahrens auch mit dem metallischen Wandteil verbunden werden.

Im Verlauf des erfindungsgemäßen Verfahrens wird eine Dose aus dem metallischen Wandteil und dem metallischen Bodenteil gebildet. Der Elektrolyt kann vor dem stoffschlüssigen Fügen des metallischen Deckelteils mit der Dose in die Dose gefüllt werden oder nach dem stoffschlüssigen Fügen des metallischen Deckelteils mit der Dose durch eine im metallischen Deckelteil vorgesehene Öffnung nachträglich befüllt werden.

Bei dem erfindungsgemäßen Verfahren wird ein metallisches Wandteil anstatt einer Zellendose, die durch Tiefziehverfahren hergestellt wird, verwendet. Um einen Kurzschluss zwischen dem Gehäuse und der zweiten Elektrodenseite des Batteriewickels zu vermeiden, wird ein Isolationselement zwischen dem metallischen Deckelteil des Gehäuses und der Kontaktfahne der zweiten Elektrodenseite des Batteriewickels eingesetzt. Zum stoffschlüssigen Fügen des Batteriewickels mit dem metallischen Bodenteil des Gehäuses enthält das metallische Bodenteil eine Stufe und / oder wird die erste Elektrodenseite des Batteriewickels mit einer weiteren Kontaktfahne in Richtung des metallischen Bodenteils vergrößert. Ein Batterieanschluss der erfindungsgemäßen Batteriezelle, der der zweiten Elektrodenseite des Batteriewickels zugeordnet ist, umfasst ein Dichtungs- und Isolationsteil, ein Terminal und eine Stromdurchführung. Der Batterieanschluss, der der ersten Elektrodenseite des Batteriewickels zugeordnet ist, benötigt hingegen weder ein Dichtungs- und Isolationsteil noch eine Stromdurchführung, so dass durch das erfindungsgemäße Verfahren der Batterieanschluss, der der ersten Elektrodenseite des Batteriewickels der Batteriezelle zugeordnet ist, dichtungsfrei und / oder frei von zusätzlichen Bauteilen ausgeführt wird.

Ein weiterer Aspekt der Erfindung betrifft eine nach dem erfindungsgemäßen Verfahren hergestellte Batteriezelle. Nach Ausführung des Verfahrens liegen das metallische Bodenteil und die aus dem metallischen Wandteil und dem metallischen Bodenteil gebildete Dose voll auf einem Potential der ersten Elektrodenseite und dienen als Stromableiter.

Eine erfindungsgemäße Batteriezelle findet vorteilhaft Verwendung in einem Elektrofahrzeug (EV), in einem Hybridfahrzeug (HEV), oder in einem Plug-In-Hybridfahrzeug (PHEV). Auch eine Verwendung in der Konsumerelektronik oder in elektrischen Werkzeugen ist denkbar.

### Vorteile der Erfindung

Die erfindungsgemäße Batteriezelle hat den Vorteil, dass bei der Batteriezelle nur wenige Bauteile für die elektrische Kontaktierung der Elektroden benötigt werden. Nach Ausführung des erfindungsgemäßen Verfahrens liegt das Gehäuse voll auf dem Potential der ersten Elektrodenseite und dient als Stromableiter. So weist ein Batterieanschluss auf der ersten Elektrodenseite des Batteriewickels der erfindungsgemäßen Batteriezelle lediglich ein Terminal auf, das direkt auf das metallische Deckelteil aufgebracht, oder in dieses integriert ist. Demzufolge werden der Stromableiter, die Dichtung und weitere Bauteile für die Stromdurchführung auf der ersten Elektrodenseite des Batteriewickels der Batteriezelle eingespart, was zu einer erheblichen Reduktion des Gewichts mit entsprechend steigendem gravimetrischen Energieinhalt führt. Aufgrund der geringeren Komplexität und der geringeren Anzahl an Bauteilen des Batterieanschlusses, kann die Batteriezelle kostengünstiger hergestellt werden.

Gleiche Vorteile ergeben sich erfindungsgemäß für die gefertigte Batteriezelle. Durch die Einsparung der Bauteile des Batterieanschlusses kann eine effizientere Volumenausnutzung der Batteriezelle erreicht werden, das heißt die Batteriezelle kann dünner hergestellt werden, somit kann ein besserer Volumennutzwert des Batteriepaketes erreicht werden. Weiterhin kann eine bessere Abdichtung der Batteriezelle durch Einsparung der Bauteile am Batterieanschluss und das stoffschlüssige Fügen von metallischem Bodenteil, metallischem Wandteil und metallischem Deckelteil erreicht werden.

Weiterhin ist vorteilhaft, dass es mit der erfindungsgemäßen Bauform möglich ist, den Aufbau einer zylindrischen Zelle auf eine prismatische Zelle zu übertragen. Dadurch ist für klassische prismatische Bauformen gemäß Norm des Verbands der Automobilindustrie (VDA), z. B. eine vom VDA standardisierte PHEV2-Zelle, eine maximale Volumenausnutzung möglich.

Ein weiterer Vorteil der erfindungsgemäßen Batteriezelle ist, dass keine neuen Prozesse im Vergleich zu bestehenden Konzepten in die Fertigung zu integrieren sind und somit bereits bestehende Anlagen genutzt werden können.

### Kurze Beschreibung der Zeichnungen

Die Erfindung wird nachfolgend anhand mehrerer Ausführungsbeispiele und der zugehörigen Zeichnungen näher erläutert.

Es zeigt:
- Figur 1: eine Explosionsdarstellung einer aus dem Stand der Technik bekannten Batterieanordnung,
- Figur 2: eine perspektivische Darstellung einer erfindungsgemäßen Batteriezelle gemäß einer ersten Ausführung,
- Figur 3: einen Schnitt durch einer erfindungsgemäße Batteriezelle gemäß der ersten Ausführungsform,
- Figur 3.1: eine Detailansicht eines Batterieanschlusses der erfindungsgemäßen Batteriezelle gemäß der ersten Ausführungsform,
- Figur 4: eine schematische Darstellung einer erfindungsgemäßen Batteriezelle gemäß einer zweiten Ausführungsform,
- Figur 5: eine perspektivische Darstellung einer erfindungsgemäßen Batteriezelle gemäß einer dritten Ausführungsform und
- Figur 6: eine schematische Darstellung des erfindungsgemäßen Verfahrens.

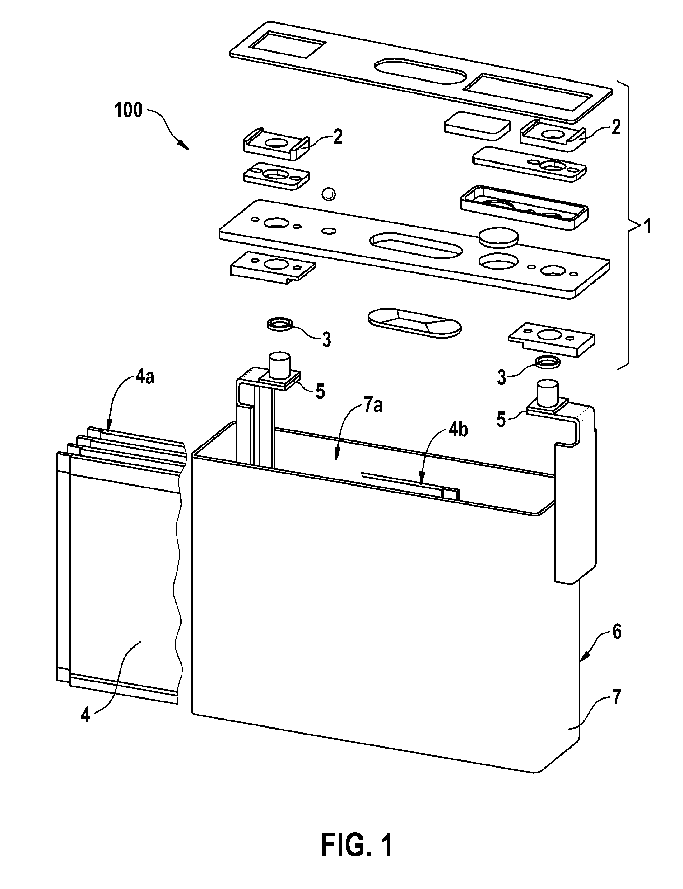

Eine aus dem Stand der Technik bekannte Batterieanordnung 100 ist in Figur 1 dargestellt. Die Batterieanordnung 100 umfasst ein Zellengehäuse 6, welches prismatisch, vorliegend quaderförmig, ausgebildet ist. Das Zellengehäuse 6 ist vorliegend elektrisch leitend ausgeführt und beispielweise aus Aluminium im Tiefziehverfahren gefertigt. Das Zellengehäuse 6 umfasst einen quaderförmigen Behälter 7, welcher an einer Seite eine Behälteröffnung 7a aufweist. Die Behälteröffnung 7a wird durch eine Deckelanordnung 1 verschlossen, welche zwei Terminals 2, zwei Dichtungen 3 und viele weitere Einzelteile umfasst.

Aus der Darstellung gemäß Figur 1 ergibt sich, dass ein Elektrodenwickel 4 in dem Behälter 7 liegt, dessen Anode 4a und Kathode 4b senkrecht zu der Behälteröffnung 7a bzw. der Deckelanordnung 1 liegen und mit zwei Stromabnehmern 5 verbunden sind.

### Ausführungsformen der Erfindung

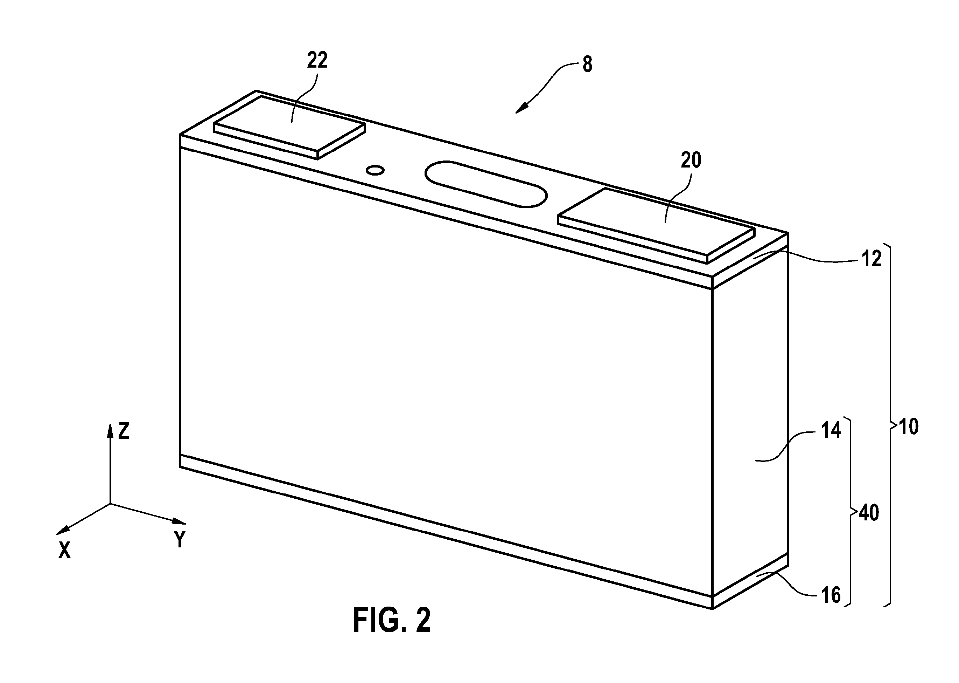

Im Folgenden wird ein dreidimensionales Koordinatensystem mit X-, Y-, und Z-Achse verwendet, das für Figuren 2 bis 5 gilt.

Figur 2 zeigt eine perspektivische Ansicht einer erfindungsgemäßen Batteriezelle 8 gemäß einer ersten Ausführungsform in dem dreidimensionalen Koordinatensystem.

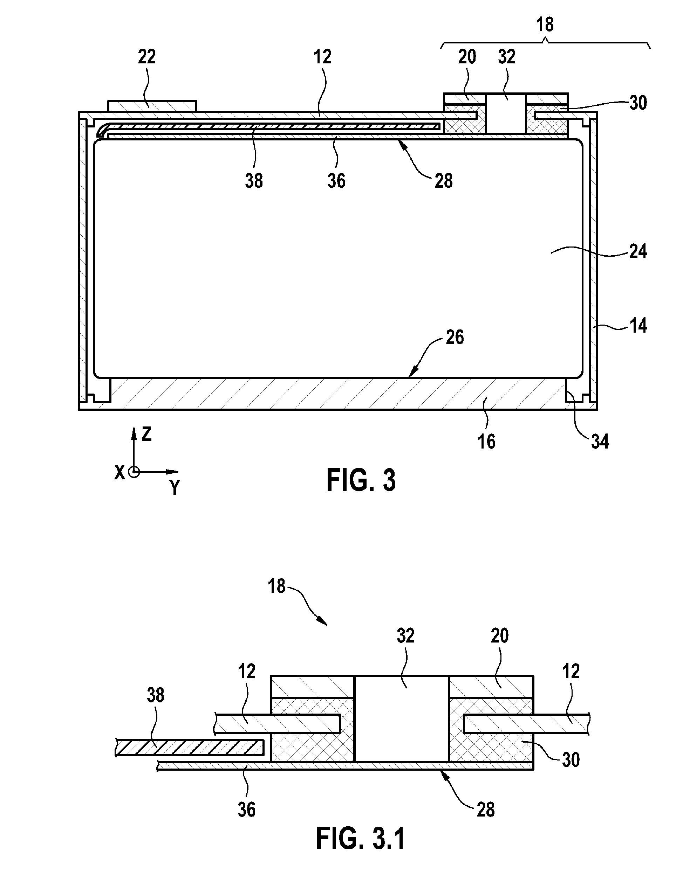

Die Batteriezelle 8 ist im Wesentlichen rechteckig und flach ausgeführt. Es befindet sich ein Batteriewickel 24 (vgl. Fig. 3) in einem Gehäuse 10 der Batteriezelle 8, wobei der Batteriewickel 24 insbesondere als Lithium-Ionen-Speicherzelle in flacher Bauweise ohne eigensteife Hülle ausgeführt ist. Weiterhin weist die Batteriezelle 8 ein erstes Terminal 20 und ein zweites Terminal 22 auf. Das Gehäuse 10 der Batteriezelle 8 umfasst ein metallisches Deckelteil 12, ein metallisches Wandteil 14 und ein metallisches Bodenteil 16. Hierbei bilden das metallische Wandteil 14 und das metallische Bodenteil 16 eine Dose 40.

Figur 3 zeigt eine Schnittdarstellung der erfindungsgemäßen Batteriezelle 8 gemäß der ersten Ausführungsform in der Y-Z-Ebene des dreidimensionalen Koordinatensystems.

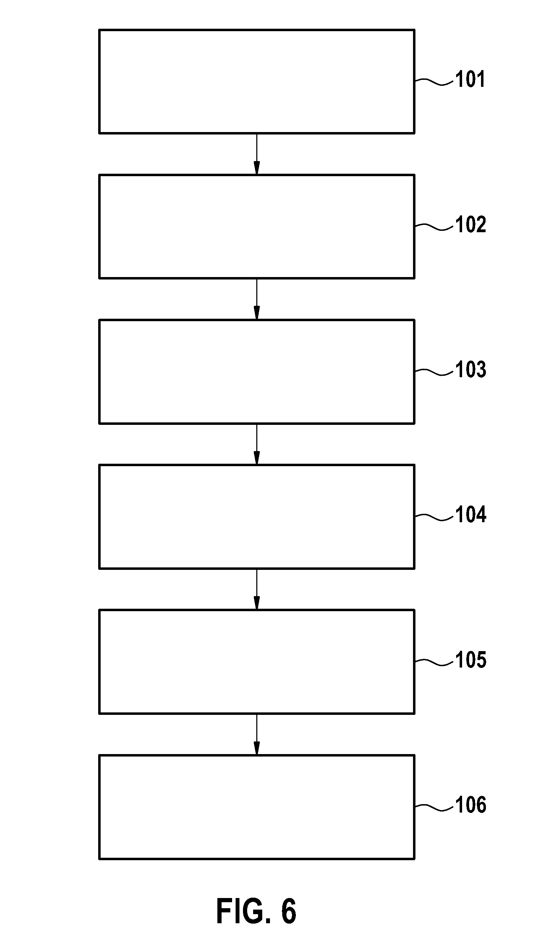

Als Ergänzung zu Figur 2 ist der sich im Gehäuse 10 befindende Batteriewickel 24 dargestellt, wobei der Batteriewickel 24 eine erste Elektrodenseite 26 und eine zweite Elektrodenseite 28 aufweist. Im Unterschied zum Stand der Technik, welcher in Figur 1 gezeigt ist, wird der Batteriewickel 24 hierbei vor der Durchführung des erfindungsgemäßen Verfahrens um die X-Achse um 90° gedreht, das heißt, die erste Elektrodenseite 26 und die zweite Elektrodenseite 28 des Batteriewickels 24 liegen nicht senkrecht zu dem metallischen Deckelteil 12 bzw. dem metallischen Bodenteil 16, sondern parallel zu dem metallischen Deckelteil 12 bzw. dem metallischen Bodenteil 16. Die erste Elektrodenseite 26 des Batteriewickels 24 wird mit dem metallischen Bodenteil 16 stoffschlüssig gefügt. Nach Einführen des Batteriewickels 24 mit dem metallischen Bodenteil 16 in das metallische Wandteil 14 und stoffschlüssigem Fügen des metallischen Bodenteils 16 mit dem metallischen Wandteil 14, liegen das metallische Bodenteil 16 und die durch das stoffschlüssige Fügen des metallischen Bodenteils 16 mit dem metallischen Wandteil 14 erhaltene Dose 40 voll auf einem Potential der ersten Elektrodenseite 26. Die zweite Elektrodenseite 28 des Batteriewickels 24 weist eine Kontaktfahne 36 auf und die zweite Elektrodenseite 28 wird mit einer Stromdurchführung 32 über der Kontaktfahne 36 stoffschlüssig gefügt. Das erste Terminal 20 und die Stromdurchführung 32 sowie ein Dichtungs- und Isolationsteil 30 bilden einen Batterieanschluss 18, wobei die Stromdurchführung 32 das metallische Deckelteil 12 und das Dichtungs- und Isolationsteil 30 durchragt und mit dem ersten Terminal 20 verbunden ist. Das metallische Deckelteil 12 wird mit der aus dem metallischen Wandteil 14 und dem metallischen Bodenteil 16 gebildeten Dose 40 stoffschlüssig gefügt, wobei zwischen dem metallischen Deckelteil 12 und der Kontaktfahne 36 der zweiten Elektrodenseite 28 des Batteriewickels 24 ein Isolationselement 38 eingebaut wird. Bei dem stoffschlüssigen Fügen der ersten Elektrodenseite 26 mit dem metallischen Bodenteil 16 ist zu beachten, dass das metallische Bodenteil 16 eine Stufe 34 enthält und / oder die erste Elektrodenseite 26 des Batteriewickels 24 mit einer weiteren Kontaktfahne 37 (vgl. Fig. 6) in Richtung des metallischen Bodenteils 16 (d. h. in die Z-Richtung des dreidimensionalen Koordinatensystems) vergrößert wird. Das zweite Terminal 22 kann im Verlauf des Verfahrens auf das metallische Deckelteil 12 aufgebracht oder in dieses integriert werden.

Figur 3.1 zeigt eine Detailansicht eines Batterieanschlusses 18 der erfindungsgemäßen Batteriezelle 8 gemäß der ersten Ausführungsform. Wie in Figur 3.1 dargestellt, erstreckt sich die Stromdurchführung 32 durch das Dichtungs- und Isolationsteil 30 und das metallische Deckelteil 12 und ist mit dem ersten Terminal 20 verbunden. Die Kontaktfahne 36 der zweiten Elektrodenseite 28 des Batteriewickels 24 wird mit der Stromdurchführung 32 stoffschlüssig gefügt. Das Isolationselement 38 wird zwischen dem metallischen Deckelteil 12 und der Kontaktfahne 36 der zweiten Elektrodenseite 28 des Batteriewickels 24 eingebaut.

Im Vergleich mit der erfindungsgemäßen Lösung nach Figuren 2, 3 und 3.1 ist eine Montage der Batterieanordnung 100 gemäß dem Stand der Technik, welcher in Figur 1 dargestellt ist, aufwendig und kostenintensiv.

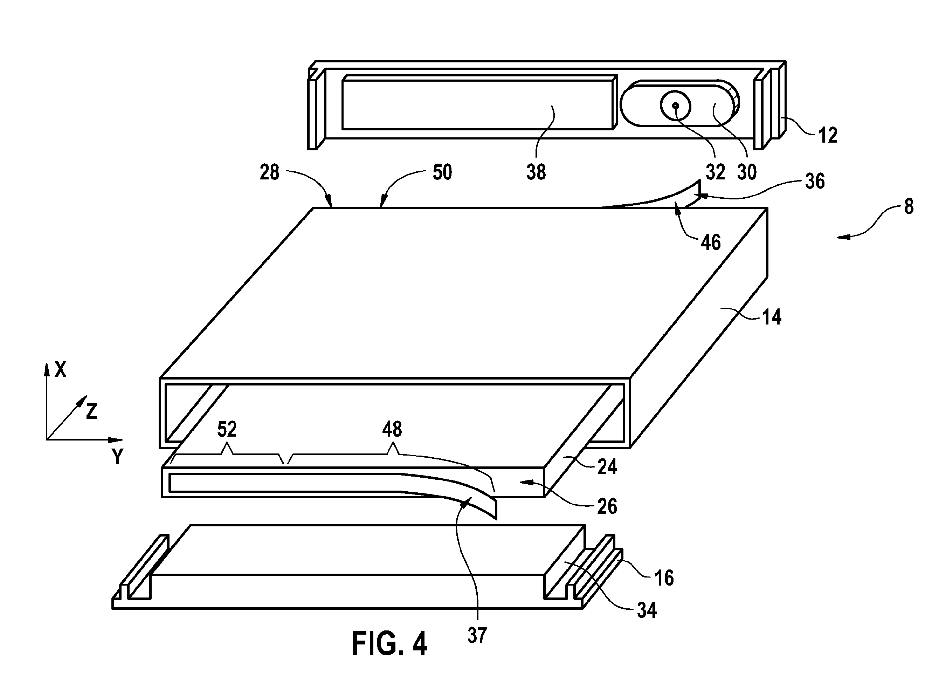

Eine zweite Ausführungsform der erfindungsgemäßen Batteriezelle 8 ist in Figur 4 dargestellt. Hierbei wird das metallische Bodenteil 16 mit der ersten Elektrodenseite 26 des Batteriewickels 24 der Batteriezelle 8 nach einem Einführen des Batteriewickels 24 in das metallische Wandteil 14 stoffschlüssig gefügt. In der Ausführungsform der Figur 4 weist die erste Elektrodenseite 26 hierzu eine weitere Kontaktfahne 37 auf, wobei die weitere Kontaktfahne 37 mit dem metallischen Bodenteil 16 stoffschlüssig gefügt wird. Die Kontaktfahne 36 weist einen Befestigungsabschnitt 50 und ein ausgelenktes Ende 46 auf. Der Befestigungsabschnitt 50 der Kontaktfahne 36 wird an der zweiten Elektrodenseite 28 angebracht, während das ausgelenkte Ende 46 der Kontaktfahne 36 flach mit der Stromdurchführung 32, die sich durch das metallische Deckelteil 12 und das Dichtungs- und Isolationsteil 30 erstreckt, stoffschlüssig gefügt wird. Ein Isolationselement 38 wird zwischen dem metallischen Deckelteil 12 und der Kontaktfahne 36 eingebaut. Die weitere Kontaktfahne 37 weist einen Befestigungsabschnitt 52 und ein ausgelenktes Ende 48 auf. Über den Befestigungsabschnitt 52 wird die weitere Kontaktfahne 37 an der ersten Elektrodenseite 26 des Batteriewickels 24 angebracht, während das ausgelenkte Ende 48 flach mit dem metallischen Bodenteil 16 stoffschlüssig gefügt wird. Das metallische Bodenteil 16 kann hierbei mit oder ohne die Stufe 34 gefertigt werden. Das metallische Deckelteil 12 und das metallische Bodenteil 16 können dabei seitlich neben dem metallischen Wandteil 14 liegen. Nach einem stoffschlüssigen Fügen des metallischen Bodenteils 16 mit dem metallischen Wandteil 14 wird das metallische Deckelteil 12 auf die aus dem metallischen Wandteil 14 und dem metallischen Bodenteil 16 gebildete Dose 40 geklappt und stoffschlüssig gefügt.

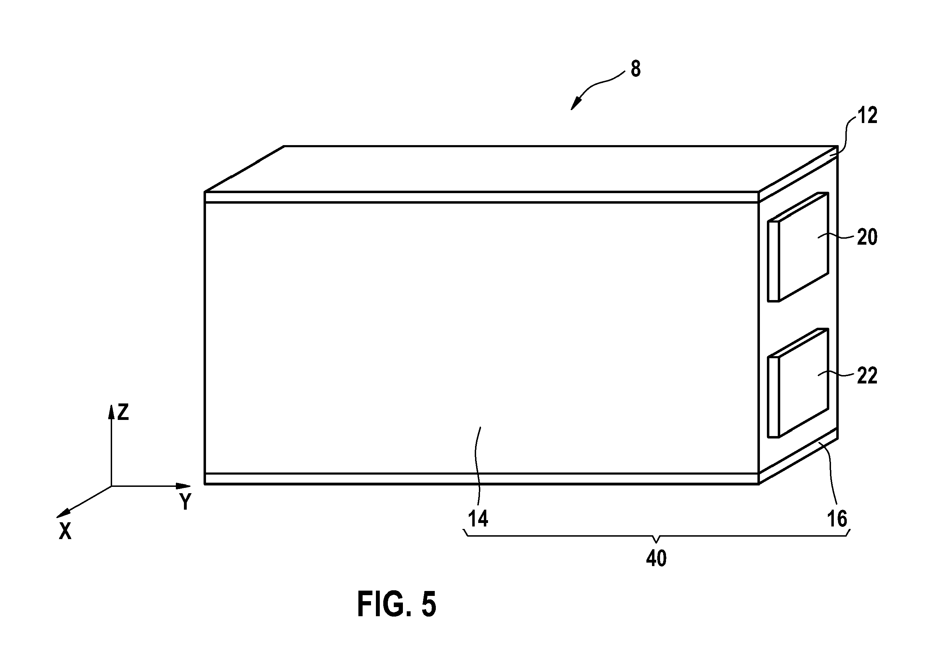

Figur 5 stellt eine erfindungsgemäße Batteriezelle 8 gemäß einer dritten Ausführungsform dar. Die Batteriezelle 8 weist das erste Terminal 20, das zweite Terminal 22, das metallische Deckelteil 12, das metallische Wandteil 14 und das metallische Bodenteil 16 auf. Die beiden Terminals 20 und 22 sind hierbei nicht auf das metallische Deckelteil 12 aufgebracht, sondern an der schmalen Seite des metallischen Wandteils 14 angeordnet. Eine der beiden Kontaktfahnen 36 und 37 (vgl. Fig. 4) wird mit der Stromdurchführung 32 (vgl. Fig. 3 bis 4), die sich durch eine schmale Seite des metallischen Wandteils 14 erstreckt, stoffschlüssig gefügt und mit dem ersten Terminal 20 verbunden, währende die andere Kontaktfahne an dem Gehäuse 10 angebracht wird. Das zweite Terminal 22 kann im Verlauf des erfindungsgemäßen Verfahrens an der schmalen Seite des metallischen Wandteils 14 angebracht werden. Nach einem stoffschlüssigen Fügen des metallischen Bodenteils 16 mit dem metallischen Wandteil 14 wird das metallische Deckelteil 12 auf die aus dem metallischen Wandteil 14 und dem metallischen Bodenteil 16 gebildete Dose 40 geklappt und stoffschlüssig gefügt.

In Figur 6 ist ein schematischer Ablauf einer Ausführungsform des erfindungsgemäßen Verfahrens dargestellt.

Wie in Figur 3 gezeigt, wird das Batteriewickel 24 vor der Durchführung des Verfahrens um 90° gedreht. In einem ersten Schritt 101 wird die erste Elektrodenseite 26 des Batteriewickels 24 mit dem metallischen Bodenteil 16 des Gehäuses 10 der Batteriezelle 8 stoffschlüssig gefügt, bevorzugt kommt hier das Schweißen in Frage. Prinzipiell gibt es auch die Möglichkeit, andere stoffschlüssige Fügeverfahren einzusetzen, beispielsweise Löten, Hartlöten, Kleben oder ähnliches.

In einem zweiten Schritt 102 werden das metallische Bodenteil 16 und der Batteriewickel 24 in das metallische Wandteil 14 des Gehäuses 10 der Batteriezelle 8 eingeführt. In einem dritten Schritt 103 wird das metallische Bodenteil 16 mit dem metallischen Wandteil 14 stoffschlüssig gefügt, sodass eine Dose 40 ausgebildet wird. In einem vierten Schritt 104 wird die Kontaktfahne 36 der zweiten Elektrodenseite 28 des Batteriewickels 24 mit der Stromdurchführung 32, die sich durch das metallische Deckelteil 12 des Gehäuses 10 der Batteriezelle 8 und das Dichtungs- und Isolationsteil 30 erstreckt, stoffschlüssig gefügt und mit dem ersten Terminal 20 verbunden. In einem fünften Schritt 105 wird das metallische Deckelteil 12 mit der im dritten Schritt 103 erhaltenen Dose 40 stoffschlüssig gefügt. In einem sechsten Schritt 106 wird ein zweites Terminal 22 direkt auf das metallische Deckelteil 12 aufgebracht oder in dieses integriert.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereiches eine Vielzahl von Abwandlungen möglich, die im Rahmen fachmännischen Handelns liegen.

## Patentansprüche

1. Verfahren zum Herstellen einer Batteriezelle (8), insbesondere einer Lithium-Ionen-Batteriezelle, umfassend ein Gehäuse (10) und einen in dem Gehäuse (10) angeordneten Batteriewickel (24), wobei der Batteriewickel (24) eine erste Elektrodenseite (26) und eine zweite Elektrodenseite (28) aufweist, **dadurch gekennzeichnet, dass** das Verfahren folgende Schritte aufweist:
- stoffschlüssiges Fügen der ersten Elektrodenseite (26) des Batteriewickels (24) mit einem metallischen Bodenteil (16) des Gehäuses (10) vor oder nach dem Einführen des Batteriewickels (24) in ein metallisches Wandteil (14) des Gehäuses (10),
- stoffschlüssiges Fügen der zweiten Elektrodenseite (28) des Batteriewickels (24) mit einer Stromdurchführung (32) nach einem Einführen des Batteriewickels (24) in das metallisches Wandteil (14), wobei
nach einem stoffschlüssigen Fügen des metallische Bodenteils (16) mit dem metallischen Wandteil (14) und dem stoffschlüssigen Fügen der zweiten Elektrodenseite (28) mit der Stromdurchführung (32) ein metallisches Deckelteil (12) mit dem metallischen Wandteil (14) stoffschlüssig gefügt wird, und wobei das stoffschlüssigen Fügen des metallischen Bodenteils (16) mit dem metallischen Wandteil (14) erst nach dem stoffschlüssigen Fügen der ersten Elektrodenseite (26) des Batteriewickels (24) mit dem metallischen Bodenteil (16) erfolgt.

2. Verfahren nach Anspruch 1, **dadurch gekennzeichnet, dass** die zweite Elektrodenseite (28) eine Kontaktfahne (36) aufweist und die zweite Elektrodenseite (28) mit der Stromdurchführung (32) über die Kontaktfahne (36) stoffschlüssig gefügt wird, wobei die Stromdurchführung (32) das metallische Deckelteil (12) oder das metallische Wandteil (14) durchragt und mit einem ersten Terminal (20) verbunden wird.

3. Verfahren nach Anspruch 2, **dadurch gekennzeichnet, dass** zwischen dem metallischen Deckelteil (12) und der Kontaktfahne (36) der zweiten Elektrodenseite (28) des Batteriewickels (24) ein Isolationselement (38) eingebaut wird.

4. Verfahren nach einem der Ansprüche 1 bis 3, **dadurch gekennzeichnet, dass** das metallische Deckelteil (12) oder das metallische Wandteil (14) ein damit verbundenes zweites Terminal (22) aufweist.

5. Verfahren nach einem der Ansprüche 1 bis 4, **dadurch gekennzeichnet, dass** ein prismatisches, metallisches Wandteil (14) verwendet wird.

6. Verfahren nach einem der Ansprüche 1 bis 5, **dadurch gekennzeichnet, dass** das metallische Bodenteil (16) eine Stufe (34) enthält und / oder die erste Elektrodenseite (26) des Batteriewickels (24) mit einer weiteren Kontaktfahne (37) in Richtung des metallischen Bodenteils (16) vergrößert wird.

7. Verfahren nach einem der Ansprüche 1 bis 6, **dadurch gekennzeichnet, dass** ein Batterieanschluss, der der ersten Elektrodenseite (26) des Batteriewickels (24) der Batteriezelle (8) zugeordnet ist, dichtungsfrei und / oder frei von zusätzlichen Bauteilen ausgeführt wird.

8. Batteriezelle (8), insbesondere eine Lithium-Ionen-Batteriezelle, hergestellt nach einem Verfahren gemäß einem der Ansprüche 1 bis 7.

9. Batteriezelle (8) nach Anspruch 8, **dadurch gekennzeichnet, dass** das metallische Bodenteil (16) und eine aus dem metallischen Wandteil (14) und dem metallischen Bodenteil (16) gebildete Dose (40) auf einem Potential der ersten Elektrodenseite (26) liegen und als Stromableiter dienen.

10. Verwendung der Batteriezelle (8) nach Anspruch 8 oder 9 in einem Elektrofahrzeug, in einem Hybridfahrzeug oder in einem Plug-In-Hybridfahrzeug, in der Konsumerelektronik oder in elektrischen Werkzeugen.
